## Europäisches Patentamt

## European Patent Office

## Office européen des brevets

(19)

(11) Veröffentlichungsnummer: **0 150 862**
A2

(12)

# EUROPÄISCHE PATENTANMELDUNG

(21) Anmeldenummer: 85101068.6

(22) Anmeldetag: 01.02.85

(51) Int. Cl.⁴: **H 04 L 25/49**

(30) Priorität: 02.02.84 DE 3403650

(43) Veröffentlichungstag der Anmeldung: 07.08.85
Patentblatt 85/32

(84) Benannte Vertragsstaaten: **AT BE CH DE FR GB IT LI NL SE**

(71) Anmelder: **Siemens Aktiengesellschaft, Berlin und München Wittelsbacherplatz 2, D-8000 München 2 (DE)**

(72) Erfinder: **Pospischil, Reginhard, Dr.-Ing., Gabriel von Seidlstrasse 15, D-8032 Gräfelfing (DE)**

(54) **Selbstsynchronisierender Verwürfler (Scrambler).**

(57) Selbstsynchronisierender Verwürfler für hohe Bitraten mit einer Anzahl parallel arbeitender Verwürflerstufen, die jeweils die Reihenschaltung eines ersten und eines zweiten Modulo-2-Addierers und einer Schieberegisterstufe darstellen, wobei der Ausgang der Schieberegisterstufe auf einen Eingang des ersten Modulo-2-Addierers der eigenen Verwürflerstufe rückgekoppelt ist und der andere Eingang dieses Modulo-2-Addierers mit einer weiteren Verwürflerstufe verbunden ist.

Siemens Aktiengesellschaft     Unser Zeichen
Berlin und München             VPA 84 P 1 0 6 4 E

**Selbstsynchronisierender Verwürfler (Scrambler)**

Die Erfindung betrifft einen selbstsynchronisierenden
Verwürfler entsprechend dem Oberbegriff des Anspruchs 1.

Bei der digitalen Signalübertragung können Impulsmuster
auftreten, die einen störenden Gleichstromanteil aufweisen oder deren Energieanteil bei bestimmten diskreten Frequenzen besonders hoch ist. Zur Vermeidung
dieser Impulsmuster wird das zu übertragende digitale Signal
durch Modulo-2-Addition mit einer Pseudozufallsfolge
sendeseitig verwürfelt. Empfangsseitig erfolgt durch
eine weitere Modulo-2-Addition mit der bereits sendeseitig verwendeten Pseudozufallsfolge die Entwürfelung.
Die dabei notwendige Synchronisierung der sendeseitig
und empfangsseitig verwendeten Pseudozufallsgeneratoren
kann durch Verwendung freilaufender und damit selbstsynchronisierender Verwürfler- und Entwürfleranordnungen umgangen werden.

Der Ausbau des digitalen Fernmeldenetztes führt dazu,
zwischen zentralen Punkten dieses Netzes Übertragungseinrichtungen für Signale sehr hoher Schrittgeschwindigkeit zu installieren. Daraus ergibt sich die Notwendigkeit, Verwürfler und Entwürfler für digitale Signale
hoher Taktfrequenz aufzubauen.

Aus den Siemens Forschungs- und Entwicklungsberichten
Band 6 (1977) Nr. 1, Seiten 1 bis 5 ist eine Möglichkeit bekannt, Verwürfler für PCM-Signale hoher Taktfrequenz aufzubauen. Die PCM-Signale hoher Bitfolge
werden dabei in mehreren parallelen Kanälen mit niedrigerer
Bitfolgefrequenz verwürfelt und die entstandenen Signale
durch Multiplexen zusammengefaßt. Analog dazu ist die

Ah 1 Seu / 1.2.1984

Empfangsseite aufgebaut, bei der sich an einen Demultiplexer die parallele Entwürfelung in mehreren Kanälen anschließt. Damit ergibt sich neben dem hohen Aufwand die Notwendigkeit, Multiplexer und Demultiplexer miteinander zu synchronisieren.

Die Aufgabe bei der vorliegenden Erfindung besteht darin, einen auch für die Übertragung digitaler Signale hoher Bitfolgefrequenz geeigneten selbstsynchronisierenden Verwürfler zu finden, der bei vergleichsweise geringerem Aufwand auf eine Multiplexeinrichtung verzichtet.

Erfindungsgemäß wird die Aufgabe bei einem selbstsynchronisierenden Verwürfler der eingangs genannten Art durch die im Kennzeichen des Patentanspruchs 1 enthaltenen Merkmale gelöst.

Besonders vorteilhaft bei der erfindungsgemäßen Lösung ist der auch bei längeren Verwürflern übersichtliche Aufbau aus rein digitalen Gliedern, der eine Integration wesentlich erleichtert. Bevorzugte Weiterbildungen des erfindungsgemäßen Verwürflers zur Erzeugung von Signalen mit einer Verwürflerperiode $2^7 = 127$ Bit oder von $2^5 = 31$ Bit sind in den Patentansprüchen 2 und 3 näher beschrieben.

Die Erfindung soll im folgenden anhand der Zeichnung näher erläutert werden.
In der Zeichnung zeigt

Fig. 1  die Schaltung einer einzelnen Verwürflerstufe,

Fig. 2  die Schaltung eines siebenstufigen Verwürflers und

Fig. 3  die Schaltung eines fünfstufigen Verwürflers.

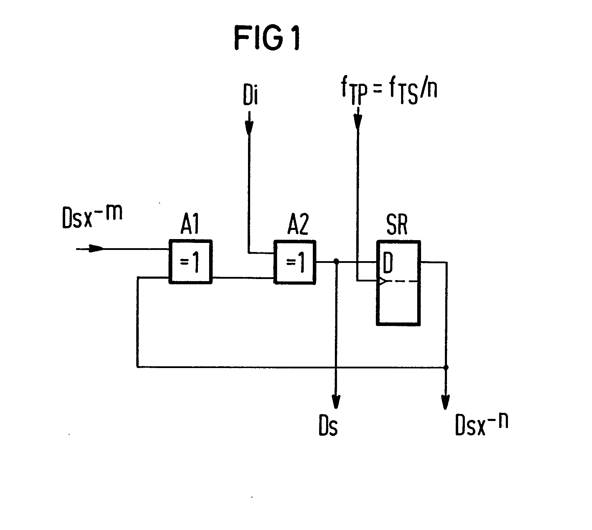

Die in der Fig. 1 dargestellte Verwürflerstufe ist Teil eines n-stufigen Verwürflers. Die Verwürflerstufe enthält einen ersten und einen zweiten Modulo-2-Addierer

0150862
VPA 84 P 1064

A1, A2 sowie eine Schieberegisterstufe SR und dient zur Verwürfelung des nten Bits des digitalen Signals, so daß am Ausgang der Schieberegisterstufe SR das entsprechende verwürfelte Bit $Ds \cdot x^{-n}$ abgegeben wird. Der Ausgang der Schieberegisterstufe SR ist außerdem mit dem ersten Eingang des ersten Modulo-2-Addierers A1 verbunden, während dessen zweiter Eingang mit dem Ausgang der Schieberegisterstufe SR derjenigen Verwürflerstufe verbunden ist, die das mte Bit verwürfelt und ein entsprechendes Ausgangssignal $Ds \cdot x^{-m}$ erzeugt. Der Ausgang des ersten Modulo-2-Addierers ist mit dem ersten Eingang des zweiten Modulo-2-Addierers A2 verbunden, an dessem zweiten Eingang ein Bit des zu verwürfelnden digitalen Signals Di anliegt. Am Ausgang des zweiten Modulo-2-Addierers ist das verwürfelte digitale Signal Ds entnehmbar. Dieses Signal steht eine Taktperiode später auch am Ausgang der Schieberegisterstufe SR an. Die Schieberegisterstufe SR wird dabei mit einem Taktsignal $F_{TP}$, dem sogenannten Schiebetakt beaufschlagt, der sich aus dem Bittakt der zu verwürfelnden digitalen Signale geteilt durch die Anzahl n der gleichzeitig parallel verarbeiteten Bits ergibt.

Für die Verwürfelung digitaler Signale werden eine Anzahl Verwürflerstufen entsprechend Figur 1 zusammengeschaltet. Die Eingänge Di und die Ausgänge Ds liegen dabei parallel, so daß für eine serielle Übertragung dem Verwürfler ein Serien-Parallel-Wandler vorzuschalten und ein Parallel-Serien-Wandler nachzuschalten ist. Die Serien-Parallel-Wandlungen für Scrambler und Descrambler und auch die entsprechenden Parallel-Serien-Wandlungen müssen dabei nicht bitsynchron erfolgen, auch eine Wortsynchronisation zwischen Scrambler und Descrambler ist nicht erforderlich. Die Anzahl der parallelen Bitströme ist nach dem jeweiligen Anwendungsfall zu optimieren. Erfolgt zum Beispiel nach der Verwürfelung eine Codeumsetzung, die eine Serien-Parallel-Wandlung voraussetzt, beispielsweise eine 4B3T- oder 5B6B Codewandlung, dann sind entsprechend im ersten Falle 4 und im zweiten Falle 5 parallele Bitströme zu verwürfeln. Die ohnehin vorhandenen Wandler erleichtern dann sende- und empfangsseitig den Einsatz der erfindungsgemäßen Parallelverwürfler. Durch die parallele Verwürfelung mit einem Bruchteil des ursprünglichen Bittaktes verringert sich die Verarbeitungsgeschwindigkeit so, daß in der Regel auf eine einfachere und damit billigere Halbleitertechnologie ausgewichen werden kann. Für eine bestimmte Verwürflerperiode benötigt ein parallel arbeitender Verwürfler die gleiche Anzahl von Schieberegisterstufen wie ein seriell arbeitender Verwürfler, die Anzahl der erforderlichen Modulo-2-Addierer ist beim parallelen Verwürfler allerdings höher.

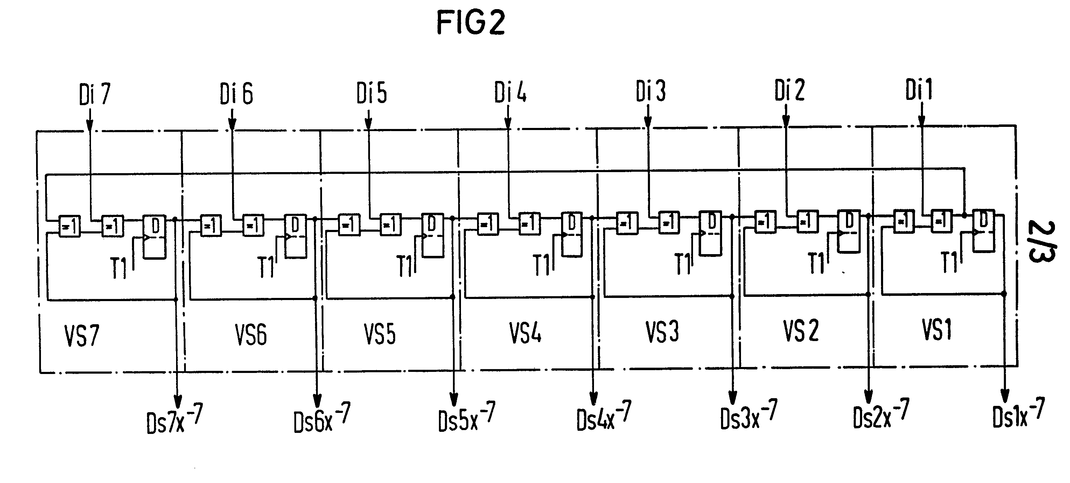

In der Fig. 2 ist ein aus sieben Verwürflerstufen nach der Fig. 1 aufgebauter selbstsynchronisierender Verwürfler dargestellt. Durch die Kettenschaltung ergibt sich eine maximal lange Bitfolge mit einer Verwürflerperiode von $2^{7-1} = 127$ Bit. Bei einer Schieberichtung von links nach rechts folgen von links nach rechts die Verwürflerstufen für das Bit n, also das siebte Bit, das sechste, ... dritte, zweite, erste Bit. Betrachtet man eine Stufe l mit $1 < l < n$, dann hat die erste Stufe links der betrachteten Stufe l am Digitalsignalausgang Ds das Signal Ds · $x^{+1}$ und am Ausgang des als Schieberegisterstufe verwendeten D-Flipflops das Signal Ds · $x^{1-n}$. Entsprechend hat die zweite Stufe links die Signale Ds · $x^2$ bzw. Ds · $x^{2-n}$. An den entsprechenden Ausgängen der ersten Stufe rechts der betrachteten Stufe l stehen umgekehrt die Signale Ds · $x^{-1}$ und Ds · $x^{-1-n}$. Beim Verwürfler nach der Fig. 2 sind n=7 und m = n-1.

0150862

Der Eingang Ds · $x^{-m}$ ist mit einem Ausgang Ds · $x^{-6}$ verbunden, das ist jeweils der Ausgang des D-Flipflops der links vorausgegangenen Stufe, wobei die siebente und letzte Stufe wiederum an die erste Stufe angeschlossen ist. Im Gegensatz zur Fig. 1 sind hier als Verwürflerausgänge nicht die Eingänge sondern die Ausgänge der Schieberegisterstufen verwendet, so daß das Ausgangssignal um eine Taktperiode des Verwürflers verschoben erscheint, dabei jedoch nochmals die getaktete Schieberegisterstufe durchläuft und dadurch frei von Impulsspitzen ist. Der zweite Eingang des ersten Modulo-2-Addierers der siebten Verwürflerstufe VS7 ist hier abweichend zu allen anderen Verwürflerstufen nicht mit dem Ausgang sondern mit dem Eingang der Schieberegisterstufe der ersten Verwürflerstufe VS1 verbunden. Die als Schieberegisterstufen verwendeten D-Flipflops werden mit einem Taktsignal beaufschlagt, dessen Frequenz gleich 1/7 der Taktfrequenz der zu verwürfelnden digitalen Signale ist.

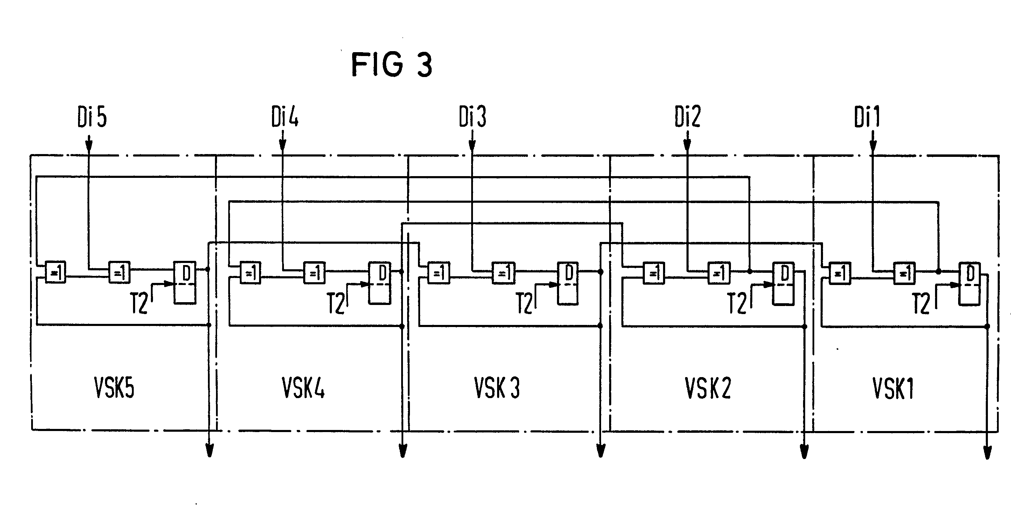

In Fig. 3 ist ein fünfstufiger Verwürfler dargestellt, bei dem n = 5 und m = n -2 = 3 ist. Die einzelnen Verwürflerstufen VSK1 ... VSK5 entsprechen der in der Fig. 1 dargestellten Verwürflerstufe, wobei das verwürfelte Signal nach Durchlaufen der einzelnen Schieberegisterstufe analog der in der Fig. 2 gezeigten Weise am Ausgang dieser Schieberegisterstufe abgenommen wird. Zur Erzeugung einer maximal langen Pseudozufallsfolge, also einer maximalen Verwürflerperiode wurde m = 3 = n-2 gewählt. Dementsprechend ist der zweite Eingang des ersten Modulo-2-Addierers der einzelnen Verwürflerstufe entweder mit dem Schieberegisterausgang der jeweils zweiten Stufe links von der Verwürflerstufe oder mit dem Eingang der Schieberegisterstufe der dritten Verwürflerstufe rechts von der betrachteten Verwürflerstufe verbunden werden. Es gilt also auch hier die allgemeine Regel, daß bei allen Verwürflerstufen bis zur (n-m+1)ten der zweite Eingang des ersten Modulo-2-Addierers der einen Verwürflerstufe mit dem Ausgang der Schieberegisterstufe der Verwürflerstufe für das mte Bit verbunden ist, wobei m kleiner als n und ganzzahlig ist. Ab der (n-m)ten Verwürflerstufe erfolgt dann die Verbindung vom zweiten Eingang des ersten Modulo-2-Addierers zum Eingang der Schieberegisterstufe der mten Verwürflerstufe, entsprechend bei der (n-m-1)ten Verwürflerstufe erfolgt die Verbindung zur Schieberegisterstufe der (n-1)ten Verwürflerstufe entsprechend.

Damit der Verwürfler nicht in eine unerwünschte Kurzperiode fällt, kann jeweils zwischen erstem und zweitem Modulo-2-Addierer ein dritter Modulo-2-Addierer eingefügt werden, dessen freier Eingang mit einer Erkennungsschaltung für die Kurzperioden verbunden ist.

Durch die Abnahme des verwürfelten Signals am Ausgang der Schieberegisterstufe erfolgt auch hier eine Unterdrückung von Impulsspitzen. Das Schiebe -Taktsignal T2 für die als Schieberegisterstufen verwendeten D-Flipflops wird durch Frequenzteilung erzeugt, wobei die Frequenz des Schiebetaktes T2 ein Fünftel der Bittaktfrequenz der zu verwürfelnden digitalen Signale ist.


3 Patentansprüche
3 Figuren

Patentansprüche

1. Selbstsynchronisierender Verwürfler mit n getakteten Schieberegisterstufen zur Erzeugung eines Signals mit einer Verwürflerperiode von $2^n-1$ Bit, wobei der Ausgang wenigstens einer Schieberegisterstufe mit dem Eingang eines Modulo-2-Addierers verbunden ist, d a d u r c h g e k e n n z e i c h n e t , daß n parallele Eingänge für jeweils eines von n parallelen Bits des zu verwürfelnden digitalen Signals vorgesehen sind, daß die Eingänge entsprechend der Folge der ankommenden Bits mit dem n-ten Bit am ersten Eingang und den folgenden Bits an den nächsten Eingängen geordnet und mit jeweils einer Verwürflerstufe verbunden sind, daß die Verwürflerstufen jeweils eine Schieberegisterstufe (SR) sowie einen ersten und einen zweiten Modulo-2-Addierer (A1, A2) enthalten und der Ausgang der Schieberegisterstufe (SR) mit dem ersten Eingang des ersten Modulo-2-Addierers (A1) und dessen Ausgang mit dem ersten Eingang des zweiten Modulo-2-Addierers (A2) verbunden ist, daß der zweite Eingang des zweiten Modulo-2-Addierers (A2) mit dem zugeordneten Eingang für das digitale Signal verbunden ist, daß der Ausgang des zweiten Modulo-2-Addierers (A2) mit dem Eingang der in der gleichen Verwürflerstufe enthaltenen Schieberegisterstufe (SR) verbunden ist, daß bei allen Verwürflerstufen bis zur (n-m+1)ten der zweite Eingang des ersten Modulo-2-Addierers (A1) der einen Verwürflerstufe mit dem Ausgang der Schieberegisterstufe der Verwürflerstufe für das m-te Bit verbunden ist, daß m kleiner n und ganzzahlig ist, daß bei der (n-m)ten Verwürflerstufe die Verbindung vom zweiten Eingang des ersten Modulo-2-Addierers zum Eingang der Schieberegisterstufe der nten Verwürflerstufe erfolgt und entsprechend von der (n-m-1)ten Verwürflerstufe zur (n-1)ten Verwürflerstufe, daß wahlweise an den Eingängen oder an den Ausgängen der Schieberegisterstufen die einzelnen Bits des verwürfelten

Ah 1 Seu / 1.2.1984

digitalen Signals entnehmbar sind und daß die Takteingänge der Schieberegisterstufen mit einer Quelle für ein Taktsignal verbunden ist, dessen Frequenz der $\frac{1}{n}$ -fache Teil der Bittaktfrequenz der digitalen Signale ist.

2. Selbstsynchronisierender Verwürfler nach Patentanspruch 1, d a d u r c h  g e k e n n z e i c h n e t , daß 7 parallele Eingänge zum Anschluß an sieben Stufenausgänge eines Serien-Parallel-Wandlers vorgesehen sind, dessen Serieneingang mit der Quelle für die zu verwürfelnden digitalen Signale verbunden ist, daß jeder der parallelen Eingänge (Di1 ... Di7) mit einer von 7 Verwürflerstufen (VS1 ... VS7) verbunden ist, daß der zweite Eingang des ersten Modulo-2-Addierers der siebten Verwürflerstufe (VS7) mit dem Ausgang des zweiten Modulo-2-Addierers der ersten Verwürflerstufe (VS1) verbunden ist, daß sieben parallele Ausgänge für das verwürfelte digitale Signal mit einer Verwürflerperiode von $(2^7-1)$ Bit vorgesehen sind, die jeweils getrennt mit den Ausgängen der Schieberegisterstufen (SR) der einzelnen Verwürflerstufen verbunden sind und daß die Schieberegisterstufen mit einer Quelle für ein Taktsignal mit einer Frequenz entsprechend $\frac{1}{7}$ der Bittaktfrequenz der zu verwürfelnden digitalen Signale verbunden sind.

3. Selbstsynchronisierender Verwürfler nach Patentanspruch 1 , d a d u r c h  g e k e n n z e i c h n e t , daß 5 parallele Eingänge zu parallelen Verarbeitungen von 5 Bit des zu verwürfelnden digitalen Signals vorgesehen sind, daß die 5 parallelen Eingänge jeweils getrennt mit einer von 5 Verwürflerstufen (VSK1 ... VSK5) verbunden . sind, daß  der zweite Eingang des ersten Modulo-2-Addierers der ersten Verwürflerstufe (VSK1) mit dem Ausgang der Schieberegisterstufe der dritten Verwürflerstufe (VSK3) verbunden ist, daß der zweite Eingang des ersten Modulo-2-Addierers der zweiten Verwürflerstufe (VSK2) mit dem Ausgang der Schieberegisterstufe der vierten Verwürflerstufe (VSK4) verbunden ist, daß der

0150862

84 P 1 0 6 4 E

zweite Eingang des ersten Modulo-2-Addierers der dritten Verwürflerstufe (VSK3) mit dem Ausgang der Schieberegisterstufe der fünften Verwürflerstufe (VSK5) verbunden ist, daß der zweite Eingang des ersten Modulo-2-Addierers der vierten Verwürflerstufe (VSK4) mit dem Eingang der Schieberegisterstufe der ersten Verwürflerstufe (VSK1) verbunden ist, daß der zweite Eingang des ersten Modulo-2-Addierers der fünften Verwürflerstufe (VSK5) mit dem Eingang der Schieberegisterstufe der zweiten Verwürflerstufe (VSK2) verbunden ist und daß die Schieberegisterstufen mit einer Quelle für ein Taktsignal mit einer Frequenz entsprechend $\frac{1}{5}$ der Bittaktfrequenz der zu verwürfelnden digitalen Signale verbunden sind.

FIG 1

$D_i$

$f_{TP} = f_{TS}/n$

$Dsx^{-m}$

A1
=1

A2
=1

SR
D

$Ds$

$Dsx^{-n}$

# FIG2

2/3

0150862

# FIG 3